# EUROPÄISCHE PATENTSCHRIFT

(11) **EP 2 161 430 B1**
(45) Veröffentlichungstag und Bekanntmachung des Hinweises auf die Patenterteilung: **19.01.2011**
(21) Anmeldenummer: 09169314.3
(22) Anmeldetag: 03.09.2009
(51) Int. Cl.: F02B 29/04, F02B 47/02

(54) **Ladeluftkühler mit Kondensatablauf**
Charge-air cooler with condensation drain
Refroidisseur d'air de suralimentation doté d'une sortie de condensat

(30) Priorität: 04.09.2008 DE 102008045685
(43) Veröffentlichungstag der Anmeldung: 10.03.2010
(73) Patentinhaber: Pierburg GmbH, 41460 Neuss (DE)
(72) Erfinder: Kühnel, Hans-Ulrich, 41239 Möchengladbach (DE); Hüsges, Hans-Jürgen, 47877 Willich (DE); Sanders, Michael, 41564 Kaarst (DE)
(74) Vertreter: Ter Smitten, Hans

(56) Entgegenhaltungen:
- WO-A1-98/07975
- WO-A1-2007/069972
- FR-A1- 2 870 892
- JP-A- 2000 130 172

## Beschreibung

Die Erfindung bezieht sich auf eine Verbrennungsmotor-Anordnung mit einer Abgasrückführung, einem Ladeluft-Verdichter und einem Ladeluftkühler zwischen dem Verdichter und dem Verbrennungsmotor.

Eine derartige Anordnung ist aus DE10 2005 050133 A1 bekannt. Hierbei wird das bei der durch die Ladeluftkühlung unweigerlich anfallenden Kondensat aus dem Ladeluftkühler durch eine Ablauföffnung zu einem Kondensat-Sammler geleitet. Die Ablauföffnung ist nicht verschließbar.

WO 2007/069972 A zeigt einen Ladeluftkühler mit verschließbarer Kondensat-Ablauföffnung; die Kondensatabführung ist jedoch nicht beschrieben.

Aufgabe der Erfindung ist es demgegenüber, eine Verbrennungsmotor-Anordnung mit vereinfachter Ladeluftkühlung und insbesondere mit vereinfachter Kondensat-Abführung zu schaffen.

Diese Aufgabe wird erfindungsgemäß gelöst durch die Merkmale des Patentanspruches 1.

Die erfindungsgemäße Verbrennungsmotor-Anordnung weist einen Ladeluftkühler auf, bei dem am tiefsten Punkt seines Ladeluft-Luftkanals eine durch einen Öffnungsverschluss verschließbare Kondensat-Ablauföffnung vorgesehen ist, die durch eine Kondensatablauf-Leitung mit der Ladeluftleitung verbunden ist. Das Kondensat aus dem Ladeluftkühler wird also durch die Kondensat-Ablauföffnung und die Kondensatablauf-Leitung direkt in die Ladeluftleitung eingeleitet, die zwischen dem Ladeluftkühler und dem Verbrennungsmotor angeordnet ist. Das anfallende Kondensat wird also sofort wieder in die Ladeluft eingespeist.

Allerdings ist eine Einspeisung des Kondensates in die Ladeluft nicht bei jedem Betriebszustand des Verbrennungsmotors sinnvoll bzw. gewünscht. Durch eine entsprechende Steuerung des die Ablauföffnung verschließenden Öffnungsverschlusses kann die Einspeisung des Kondensates in die abgekühlte Ladeluft gesteuert bzw. geregelt werden. Auf diese Weise kann beispielsweise der Öffnungsverschluss die Ablauföffnung dann verschließen, wenn der Verbrennungsmotor noch nicht seine Betriebstemperatur erreicht hat, wenn eine bestimmte Grenzdrehzahl des Verbrennungsmotors unterschritten wird, wenn bestimmte Druckverhältnisse oder Ladeluft-Flussgeschwindigkeiten unter- bzw. überschritten werden etc. Erst eine Steuerung des Kondensatablaufes ermöglicht die Einspeisung des Kondensates in die Ladeluftleitung zwischen dem Ladeluftkühler und dem Verbrennungsmotor. Auf diese Weise kann die Entsorgung des Kondensats auf sehr einfache kosten- und platzsparende Weise realisiert werden.

Gemäß einer bevorzugten Ausgestaltung ist im Verlauf der Ladeluftleitung eine Drosselklappe zwischen dem Ladeluftkühler und dem Verbrennungsmotor angeordnet, wobei die Kondensat-Ablaufleitung, in Strömungsrichtung der Ladeluft gesehen, hinter der Drosselklappe in die Ladeluftleitung mündet, so dass die Drosselklappe durch die Kondensatleitung kurzgeschlossen wird, wenn der die Ablauföffnung verschließende Öffnungsverschluss in seiner Öffnungsposition steht. Bei geöffnetem Öffnungsverschluss bildet die Kondensatablauf-Leitung einen Kurzschluss der Drosselklappe. Dieser Kurzschluss weist im Vergleich zu der Ladeluftleitung nur einen kleinen Querschnitt auf. Wird der wirksame Querschnitt der Ladeluftleitung jedoch bei geschlossener Drosselklappe entsprechend klein, ist der Querschnitt der Ladeluftleitung im Verhältnis so erheblich, dass bei geöffneter Ablauföffnung der hierdurch gebildete Kurzschluss eine Störung des Motorlaufes verursachen würde. Dies kann beispielsweise dadurch umgangen werden, dass der Öffnungsverschluss der Kondensat-Ablauföffnung mechanisch mit der Drosselklappe gekoppelt ist, oder abhängig von der Drosselklappenposition gesteuert wird.

Grundsätzlich kann der Kondensat-Anfall in dem Ladeluftkühler dadurch erheblich reduziert werden, dass in der Abgasrückführung, insbesondere in der Niederdruck-Abgasrückführung, ein Abgasrückführungs-Kühler vorgesehen ist, der das zurückgeführte Abgas kühlt. Vorzugweise weist die Verbrennungsmotor-Anordnung jedoch eine Abgasrückführung auf, die keinen Abgasrückführungs-Kühler aufweist. Das zurückgeführte Abgas wird erst nach seiner Verdichtung in dem Ladeluft-Verdichter in dem Ladeluftkühler abgekühlt. Mit einer derartigen Anordnung wird ein Kühler im Verlauf der Abgasrückführung eingespart, wodurch erhebliche Kosten, Gewicht und Bauraum eingespart werden. Allerdings fallen bei einer derartigen Anordnung in dem Ladeluftkühler erhebliche Mengen an Kondensat an. Bei Betrieb mit mittlerer oder hoher Last, das heißt, bei großen Ladeluftmengen und relativ hohen Ladeluft-Temperaturen, spielen auch größere Kondensatmengen, die hinter dem Ladeluftkühler in die Ladeluft eingespeist werden für den Betrieb des Verbrennungsmotors keine Rolle. Allerdings ist unbedingt zu vermeiden, dass der Verbrennungsmotor bei niedrigen Drehzahlen und niedriger Last, beispielsweise im Leerlauf, mit hohen Kondensatmengen, das heißt, mit einer hohen Feuchtigkeit in der Ladeluft belastet wird. Hierdurch würde der Verbrennungsprozess im Verbrennungsmotor erheblich verschlechtert. Mit der Kombination einer Niederdruck-Abgasrückführung ohne einen Abgasrückführungs- Kühler mit einem Ladeluftkühler-Kondensatablauf, der in die Ladeluftleitung mündet, wird eine Anordnung geschaffen, die die Ladeluftkühlung erheblich vereinfacht, und gleichzeitig den Abfluss der in dem Ladeluftkühler anfallenden Kondensatmengen durch die mit dem Öffnungsverschluss bei Bedarf verschließbare Kondensat-Ablauföffnung derart steuert, dass das Kondensat auf konstruktiv sehr einfache Weise in die Ladeluftleitung zwischen dem Ladeluftkühler und dem Verbrennungsmotor eingeleitet wird.

Der Öffnungsverschluss kann beispielsweise elektrisch angetrieben sein, so dass der Öffnungsverschluss elektrisch durch eine Motorsteuerung gesteuert werden kann, wobei die Motorsteuerung ein Steuerelement für den Öffnungsverschluss bildet. Als Steuerelement kann jedoch grundsätzlich auch ein pneumatisches Antriebselement dienen. Als Steuerelement kann alternativ auch ein thermisches Antriebselement dienen, beispielsweise eine Bimetallfeder u.Ä. Ein derartiges thermisches Steuerelement würde den Öffnungsverschluss erst oberhalb einer bestimmten Mindesttemperatur öffnen.

Im Folgenden werden unter Bezugnahme auf die Zeichnungen mehrere Ausführungsbeispiele der erfindungsgemäßen Verbrennungsmotor-Anordnungen bzw. der Kondensatabläufe näher erläutert.

Es zeigen:
Figur 1 eine schematische Darstellung einer Verbrennungsmotor-Anordnung mit einem Ladeluftkühler, der eine Kondensat-Ablauföffnung mit einem Öffnungsverschluss aufweist,
Figur 2 einen Längsschnitt des Ladeluftkühlers der Figur 1,
Figur 3 eine zweite Ausführungsform eines Öffnungsverschlusses, der elektrisch betrieben wird,
Figur 4 eine weitere Ausführungsform eines thermisch beeinflussten Öffnungsverschlusses, und
Figur 5 eine weitere Ausführungsform eines Öffnungsverschlusses mit auftriebsabhängiger Funktionalität.

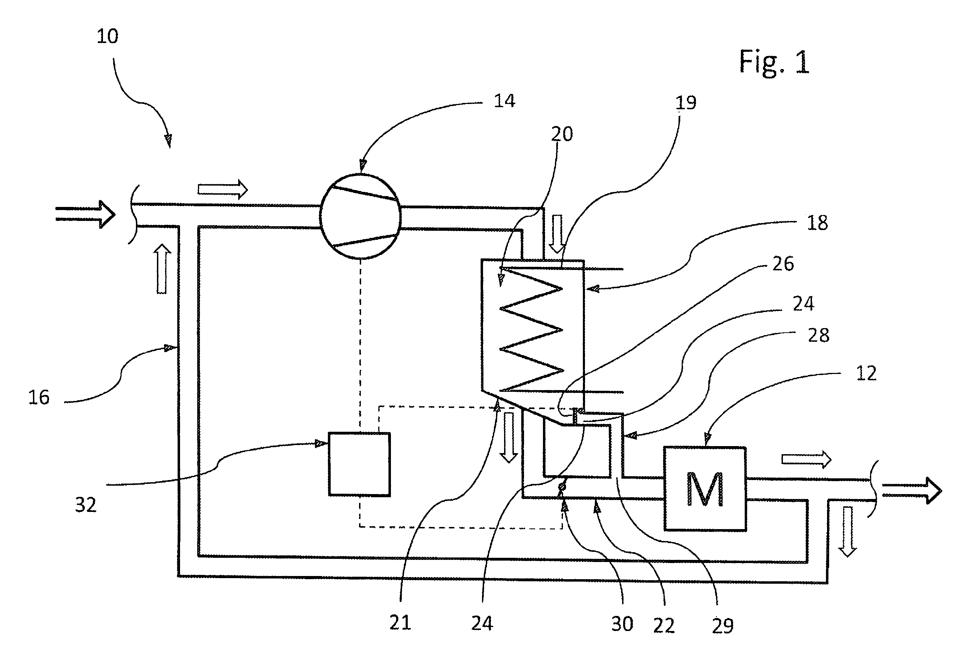

In der Figur 1 ist schematisch der Aufbau einer Verbrennungsmotor-Anordung 10 dargestellt. Die Verbrennungsmotor-Anordnung 10 weist einen Verbrennungsmotor 12 auf, der ein Benzin- oder ein Diesel-Verbrennungsmotor sein kann. Die Anordnung 10 weist ferner eine Niederdruck-Abgasrückführung 16 auf, die bedarfsweise einen Teil des Abgases in den Ladeluftstrang zurückführt. Die Ladeluft wird in einem Ladeluft-Verdichter 14 verdichtet und anschließend einem Ladeluftkühler 18 zugeführt, um schließlich durch eine Ladeluftleitung 22 zu dem Verbrennungsmotor 12 geführt zu werden.

Der Ladeluftkühler 18 weist einen Luftkanal 20 für die den Ladeluftkühler 18 durchströmende Ladeluft auf. In dem Luftkanal 20 ist eine von Kühlmittel durchflossene Kühlmittel-Leitung 19 angeordnet, die der den Luftkanal 20 durchströmenden Ladeluft Wärme entzieht. Das beim Abkühlen der Ladeluft auftretenden Kondensat läuft auf einer geneigtem Bodenwand 21 des Ladeluftkühlers 18 zu einer Kondensat-Ablauföffnung 24, die im tiefsten Punkt des Luftkanals 20 angeordnet ist. Der Ablauföffnung 24 ist ein Öffnungsverschluss 26 zugeordnet, der beispielsweise elektrisch oder pneumatisch ausgebildet sein kann. Die Ablauföffnung 24 ist durch eine Kondensatablauf-Leitung 28 mit der Ladeluftleitung 22 verbunden. Die Kondensatablauf-Leitung 28 ist ebenfalls derart geneigt, dass das Kondensat durch die Kondensatablauf-Leitung 28 ohne Pumpe in die Ladeluftleitung 22 ablaufen kann. Zwischen dem Ladeluftkühler 18 und der Einspeisungsöffnung 29 der Kondensatablauf- Leitung 28 ist in der Ladeluftleitung 22 eine Drosselklappe 30 angeordnet.

Als Steuerelement ist eine zentrale Motorsteuerung 32 vorgesehen, die über Steuerleitungen unter anderem den Verdichter 14, die Drosselklappe 30 und den Öffnungsverschluss 26 steuert. Die Motorsteuerung 32 steuert den elektromechanischen Öffnungsverschluss 26 derart, dass dieser bei einer Drehzahl des Verbrennungsmotors 12 unterhalb einer Grenzdrehzahl oder bei geschlossener Drosselklappe 30, und insbesondere bei Schiebebetrieb, den Öffnungsverschluss 26 in die Schließposition bringt. Hierdurch ist sichergestellt, dass beispielsweise im Leerlauf kein Kondensat in die Ladeluft eingespeist wird, wodurch der Leerlauf verbessert wird und auch die Schadstoffemissionen verringert werden.

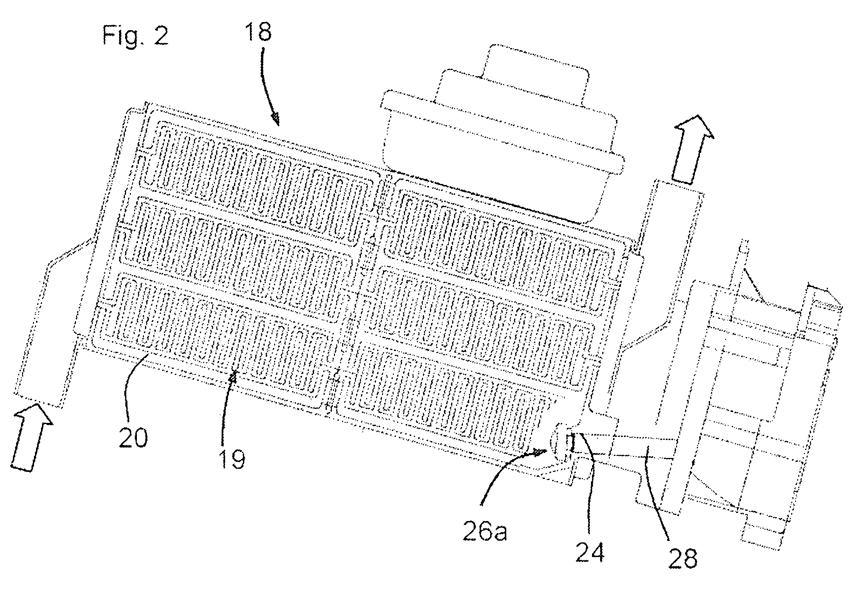

In der Figur 2 ist eine alternative Ausbildung des Ladeluftkühlers 18 mit einem pneumatischen Öffnungsverschluss 26a dargestellt. Der pneumatische Öffnungsverschluss 26 kann beispielsweise über eine kleine Gas-Steuerleitung mit der Ladeluftleitung 22 verbunden sein, so dass der Öffnungsverschluss 26 abhängig von dem Druck in der Ladeluftleitung 22 geöffnet und geschlossen wird. Bei hohem Druck in der Ladeluftleitung 22 ist der Öffnungsverschluss 26a geöffnet, bei niedrigem Druck ist er geschlossen.

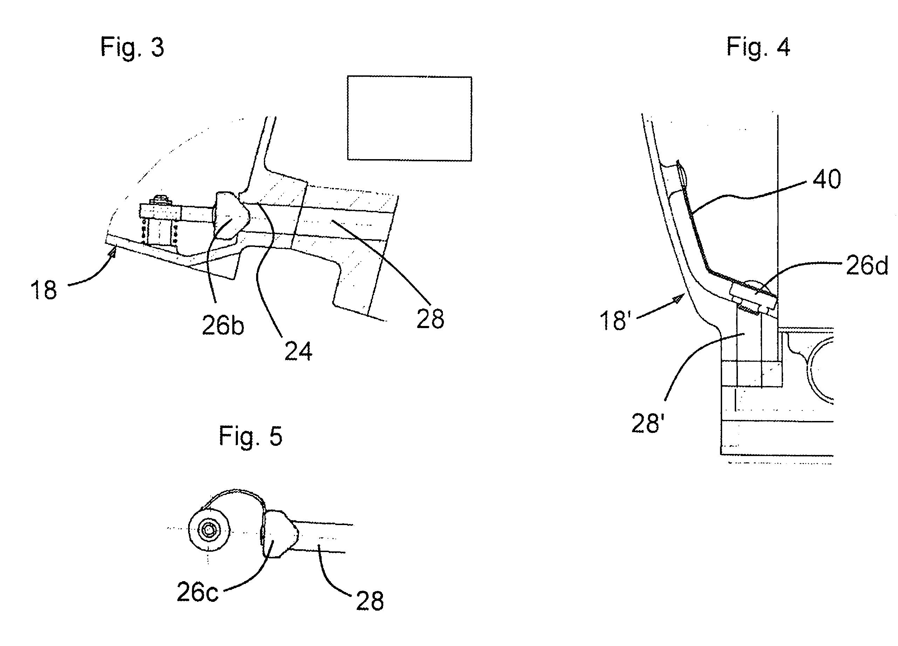

In Figur 3 ist ein elektrischer Öffnungsverschluss 26b dargestellt, der von der Motorsteuerung 32 gesteuert wird.

In der Figur 4 ist ein thermisch gesteuerter Öffnungsverschluss 26d dargestellt, der mit einem Bimetallfeder-Arm 40 an dem Ladeluftkühler-Gehäuse befestigt ist. Nur wenn die den Ladeluftkühler 18 durchströmende Ladeluft eine gewisse Mindesttemperatur überschritten hat, öffnet der Öffnungsverschluss 26d.

In Figur 5 ist eine weitere Ausführungsform eines Öffnungsverschlusses 26 c dargestellt, der auftriebsgesteuer ausgebildet ist. Bei Überschreiten eines bestimmten Kondensat-Pegels öffnet der Öffnungsverschluss 26 c automatisch.

## Patentansprüche

1. Verbrennungsmotor-Anordnung (10) mit
einem Verbrennungsmotor (12),
einem Ladeluft-Verdichter (14),
einer Abgasrückführung (16),
einem Ladeluftkühler (18) zwischen dem Verdichter (14) und dem Verbrennungsmotor (12), wobei der Ladeluftkühler (18) einen Luftkanal (20) aufweist, und
einer Ladeluftleitung (22) zwischen dem Ladeluftkühler (18) und dem Verbrennungsmotor (12),
**dadurch gekennzeichnet,**
**dass** der Ladeluftkühler (18) an dem tiefsten Punkt seines Luftkanals (20) eine durch einen Öffnungsverschluss (26) verschließbare Kondensat-Ablauföffnung (24) aufweist, die durch eine Kondensatablauf-Leitung (28) mit der Ladeluftleitung (22) verbunden ist.

2. Verbrennungsmotor-Anordnung (10) nach Anspruch 1, wobei in der Ladeluftleitung (22) eine Drosselklappe (30) zwischen dem Ladeluftkühler (18) und dem Verbrennungsmotor (12) angeordnet ist und die Kondensatablauf-Leitung 28 hinter der Drosselklappe (30) in die Ladeluftleitung (22) mündet.

3. Verbrennungsmotor-Anordnung (10) nach Anspruch 1 oder 2, wobei die Abgasrückführung (16) keinen Abgasrückführungs-Kühler aufweist.

4. Verbrennungsmotor-Anordnung (10) nach einem der Ansprüche 1 bis 3, wobei ein Steuerelement zum Steuern des Öffnungsverschlusses (26) vorgesehen ist.

5. Verbrennungsmotor-Anordnung (10) nach Anspruch 4, wobei das Steuerelement den Öffnungsverschluss (26) derart steuert, dass die Kondenstat-Ablauföffnung (24) bei geschlossener Drosselklappe (30) und/oder bei Betrieb des Verbrennungsmotors (12) unterhalb einer Grenzdrehzahl schließt.

6. Verbrennungsmotor-Anordnung (10) nach Anspruch 4 oder 5, wobei das Steuerelement eine Motorsteuerung (32) ist.

7. Verbrennungsmotor-Anordnung (10) nach Anspruch 4 oder 5, wobei das Steuerelement mechanisch ausgebildet ist.

8. Verbrennungsmotor-Anordnung (10) nach einem der Ansprüche 4 bis 7, wobei der Öffnungsverschluss (26) mechanisch mit der Drosselklappe (30) verbunden ist.

9. Verbrennungsmotor-Anordnung (10) nach einem der Ansprüche 4 bis 8, wobei das Steuerelement pneumatisch ausgebildet ist und mit einem gasführenden Teil der Anordnung (10) über eine pneumatische Steuerleitung verbunden ist.

10. Verbrennungsmotor-Anordnung (10) nach einem der Ansprüche 4 bis 8, wobei das Steuerelement ein thermisches Steuerelement ist.

11. Verbrennungsmotor-Anordnung (10) nach einem der Ansprüche 4 bis 7, wobei das Steuerelement auftriebsgesteuert ist und den Öffnungsverschluss (26) in Abhängigkeit von dem Kondensatpegel in dem Luftkanal (20) steuert.

12. Ladeluftkühler (18) für eine Verbrennungsmotor-Anordnung (10) gemäß Anspruch 1, mit den Merkmalen einer der Ansprüche 1 bis 11.

## Claims

1. An internal combustion engine assembly (10) comprising
an internal combustion engine (12),
a charge-air compressor (14),
an exhaust gas return system (16),
a charge-air cooler (18) between the compressor (14) and the internal combustion engine (12), said charge-air cooler (18) comprising an air duct (20), and
a charge-air duct (22) between the charge-air cooler (18) and the internal combustion engine (12),
**characterized in that**
the charge-air cooler (18) has a condensate drain opening (24) at the lowest point of its air duct (20), which opening is adapted to be closed by means of an opening cover (26) and is connected to the charge-air duct (22) via a condensate drain duct (28).

2. The internal combustion engine assembly (10) of claim 1, wherein a throttle valve (30) is arranged in the charge-air duct (22) between the charge-air cooler (18) and the internal combustion engine (12), and the condensate drain duct (28) opens into the charge-air duct (22) downstream of the throttle valve (30).

3. The internal combustion engine assembly (10) of claim 1 or 2, wherein the exhaust gas return system (16) comprises no cooler in the exhaust gas return system.

4. The internal combustion engine assembly (10) of one of claims 1 to 3, wherein a control element is provided for controlling the opening cover (26).

5. The internal combustion engine assembly (10) of claim 4, wherein the control element controls the opening cover (26) such that the condensate drain opening (24) closes when the throttle valve (30) is closed and/or the internal combustion engine (10) operates below a limit rotational speed.

6. The internal combustion engine assembly (10) of claim 4 or 5, wherein the control element is an engine control (32).

7. The internal combustion engine assembly (10) of claim 4 or 5, wherein the control element is mechanical.

8. The internal combustion engine assembly (10) of one of claims 4 to 7, wherein the opening cover (26) is mechanically connected with the throttle valve (30).

9. The internal combustion engine assembly (10) of one of claims 4 to 8, wherein the control element is pneumatic and is connected with a gascarrying part of the assemble (10) via a pneumatic control line.

10. The internal combustion engine assembly (10) of one of claims 4 to 8, wherein the control element is a thermal control element.

11. The internal combustion engine assembly (10) of one of claims 1 to 7, wherein the control element is buoyancy-controlled and controls the opening cover (26) depending on the condensate level in the air duct (20).

12. A charge-air cooler (18) for an internal combustion engine (10) of claim 1, comprising the features of one of claims 1 to 11.

## Revendications

1. Ensemble de moteur à combustion interne (10) comprenant
un moteur à combustion interne (12),
un compresseur d'air de suralimentation (14),
un dispositif de recirculation des gaz d'échappement (16),
un refroidisseur d'air de suralimentation (18) entre ledit compresseur (14) et ledit moteur à combustion interne (12), ledit refroidisseur d'air de suralimentation (18) comprenant un conduit d'air (20), et
un conduit d'air de suralimentation (22) entre ledit refroidisseur d'air de suralimentation (18) et ledit moteur à combustion interne (12),
**caractérisé en ce**
**qu'**au point le plus bas de son conduit d'air (20), le refroidisseur d'air de suralimentation (18) comprend une ouverture de sortie de condensat (24) apte à être fermée par un bouchon d'ouverture (26), ladite ouverture étant connectée au conduit d'air de suralimentation par une ligne de sortie de condensat (28).

2. Ensemble de moteur à combustion interne (10) selon la revendication 1, dans lequel un papillon (30) est disposé dans ledit conduit d'air de suralimentation (22) entre ledit refroidisseur d'air de suralimentation (18) et ledit moteur à combustion interne (12), et ladite ligne de sortie de condensat (28) débouche dans le conduit d'air de suralimentation (22) en aval dudit papillon (30).

3. Ensemble de moteur à combustion interne (10) selon les revendications 1 ou 2, dans lequel le dispositif de recirculation des gaz d'échappement (16) ne comprend pas un refroidisseur des gaz de recirculation.

4. Ensemble de moteur à combustion interne (10) selon l'une quelconque des revendications 1 à 3, dans lequel un élément de commande est prévu pour commander ledit bouchon d'ouverture (26).

5. Ensemble de moteur à combustion interne (10) selon la revendication 4, dans lequel ledit élément de commande commande ledit bouchon d'ouverture (26) de sorte que l'ouverture de sortie de condensat (24) est fermée si le papillon (30) est fermé et/ou si le moteur sa combustion interne (12) marche à une vitesse inférieure à une vitesse de limite.

6. Ensemble de moteur à combustion interne (10) selon les revendications 4 ou 5, dans lequel ledit élément de commande est une commande de moteur (32).

7. Ensemble de moteur à combustion interne (10) selon les revendications 4 ou 5, dans lequel ledit élément de commande est mécanique.

8. Ensemble de moteur à combustion interne (10) selon l'une quelconque des revendications 4 à 7, dans lequel ledit bouchon d'ouverture (26) est lié mécaniquement avec ledit papillon (30).

9. Ensemble de moteur à combustion interne (10) selon l'une quelconque des revendications 4 à 8, dans lequel ledit élément de commande est pneumatique et connecté à une partie de l'ensemble (10), conduisant du gaz, par l'intermédiaire d'une ligne de commande pneumatique.

10. Ensemble de moteur à combustion interne (10) selon l'une quelconque des revendications 4 à 8, dans lequel ledit élément de commande est un élément de commande thermique.

11. Ensemble de moteur à combustion interne (10) selon l'une quelconque des revendications 4 à 7, dans lequel ledit élément de commande est commandé par poussée et commande ledit bouchon d'ouverture (26) en fonction du niveau de condensat dans le conduit d'air (20).

12. Refroidisseur d'air de suralimentation (18) pour un ensemble de moteur à combustion interne (10) selon la revendication 1, comprenant les caractéristiques de l'une quelconque des revendications 1 à 11.
